(19) Europäisches Patentamt
European Patent Office
Office européen des brevets

(11) Publication number: 0 339 477 A2

(12) EUROPEAN PATENT APPLICATION

(21) Application number: 89107074.0

(51) Int. Cl.⁴: C08F 8/14 , C08F 8/30

(22) Date of filing: 19.04.89

(30) Priority: 26.04.88 US 186266

(43) Date of publication of application: 02.11.89 Bulletin 89/44

(84) Designated Contracting States: AT BE CH DE ES FR GB GR IT LI LU NL SE

(71) Applicant: S.C. JOHNSON & SON, INC.
1525 Howe Street
Racine, Wisconsin 53403(US)

(72) Inventor: Bixler, Kathleen J.
3328 Wright Avenue
Racine Wisconsin 53405(US)
Inventor: Kessler, Lisa M.
2582 North Prospect
Milwaukee Wisconsin 53211(US)
Inventor: Scholsky, Kevin M.
12240 Louis Sorensen Road
Sturtevant Wisconsin 53177(US)
Inventor: Stackman, Robert W.
100 Northwood Drive
Racine Wisconsin 53402(US)

(74) Representative: Baillie, Iain Cameron et al
c/o Ladas & Parry Isartorplatz 5
D-8000 München 2(DE)

# (54) Bulk process for producing cyclic ester-modified polymers without use of catalyst.

(57) The present invention provides for a bulk process for the formation of hydroxyl or carboxylic acid containing polymeric compositions characterized by the reaction of a hydroxyl or carboxylic acid group containing ethylenic polymer with a cyclic ester in the absence of a solvent or catalyst. The compositions have enhanced film-forming characteristics including flexibility, resistance to corrosion, and the like.

EP 0 339 477 A2

This invention relates to a bulk process for producing cyclic ester-modified polymers and to polymers produced. More particularly, the invention relates to the reaction of a cyclic ester, such as a lactone, lactide, or the like, with an addition polymer carrying hydroxyl or carboxyl functionality on the backbone of the polymer. The process is carried out at 100% polymer solids content, i.e., without solvent, and without use of catalyst.

Polymers based on the reaction of hydroxyl and carboxyl containing vinyl monomers, such as the hydroxyl and carboxyl group containing acrylates, with lactones are known. Because of their good film-forming and other characteristics, these polymers are becoming fairly widely accepted in industry. Specifically,

-Sampson et al, U.S. Patent No. 3,892,714 discloses hydroxy copolymers reacted with a lactone and, thereafter, crosslinked with a polyisocyanate. According to the patent disclosure, ethylenically unsaturated monomers, at least one containing hydroxyl groups, are polymerized in the presence of a solvent. The solvent preferably should not contain hydroxyl groups. Thereafter, a lactone is reacted with the resultant hydroxyl-containing polymer in the presence of a catalyst and solvent.

- Fisk et al, U.S. Patent No. 4,082,816 discloses caprolactone-modified acrylic polymers obtained by polymerizing a mixture of vinyl monomers, at least one monomer containing a carboxyl or hydroxyl group, with caprolactone. The reaction is carried out in the presence of a free radical catalyst and a Lewis acid catalyst and in the presence of a solvent.

- The Journal of Coatings Technology, Vol. 54, No. 693, October 1982, at page 77, in an article by Theodore et al entitled "Modification Of Acrylic Polymers For High Solids Coatings," discloses the reaction of a hydroxyl acrylic polymer with epsilon-caprolactone. According to the article, the hydroxyl-containing acrylic polymer is reacted with the lactone in the presence of a solvent and dibutyltin oxide catalyst.

- Aldinger et al, U.S. Patent No. 4,368,320 discloses acrylic or methacrylic resins containing hydroxyl groups modified with epsilon-caprolactone. In the formation of the resins, an adduct of a hydroxyalkylacrylate or methacrylate and epsilon-caprolactone is formed in a first step, and then in a second step the intermediate product is further copolymerized with acrylic acid or methacrylic acid esters and optionally with vinyl aromatics in a suitable varnish solvent.

- Weber, Jr. et al, U.S. Patent No. 4,504,635 discloses a process where a monomer is formed, for example, from a hydroxyethyl acrylate and a lactone. This monomer is further reacted in the presence of a catalyst and solvent, for example with a diacrylate and optionally additional lactone.

- Bayne et al, British Patent No. 1,443,073 discloses the required presence of stannous octoate catalyst to produce a lactone-modified acrylic resin in a single step.

- Shiota et al, Journal of Applied Polymer Science, Vol. 11, pages 773-790 (1967); Vol. 12, pages 2441-2461 (1968); and Vol. 12, pages 2463-2480 (1968), establish that ring opening of lactones onto carboxylic acid-containing trunk polymers proceeds very slowly, and in some cases to a negligible extent, when the reaction is attempted without the use of a catalyst, effectively establishing the need for a catalyst.

According to the all of the aforesaid disclosures, the reaction products are formed in the presence of a solvent and a catalyst. Before the products can be used, for example, in the formation of crosslinked thermosetting re sins of the type used in coating compositions, it is often necessary to remove the solvent and/or catalyst, particularly in applications such as automotive finishes where the presence of an inonic species contributed by the catalyst can have an adverse influence on the film properties of the final coatings. Additionally, since the products are prepared in a solvent medium, the equipment used in the polymer-forming process is relatively complex and expensive.

It has been found according to the present invention that unique film-forming components are formed through the reaction of hydroxyl group or carboxylic acid group containing vinyl polymers, such as the acrylic polyols, and cyclic esters with the reaction being carried out at 100% solids without utilizing a catalyst. The fact that the reaction can be performed without the need for a catalyst is surprising since the prior art indicates that catalysts are a necessary component.

Specifically, the present invention provides for a bulk process characterized by reacting at a temperature of from 100 - 300°C for a period of from about ten minutes to six hours a polymer component obtained by polymerizing at least one ethylenically unsaturated monomer, said polymer component having hydroxyl or carboxylic acid functionality on the polymer backbone, with a cyclic ester component having the formula

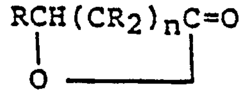

wherein n is at least one, at least n+1R are hydrogen, and the remainder of the R's are hydrogen, alkyl, cycloalkyl, alkoxy or single ring aromatic hydrocarbon radicals; said lactone component being present in an amount of from 0.1 to 10 moles per mole of hydroxyl or carboxylic acid group on said polymer component and being selected to be substantially miscible with the polymer component at the condition of the reaction, said process being carried out without use of catalyst or solvent.

As indicated the vinyl polymers having reactive hydroxyl or carboxylic acid functionality carried on the backbone of the polymer are heated to temperatures ranging from about 210 °C to about 300 °C in bulk, and a cyclic ester such as epsilon-caprolactone is added batchwise or dropwise over a period of time. The reaction time will vary from about ten minutes to about six hours depending upon reaction temperature, quantity of cyclic ester added, and the melt viscosity of the precursor resin. The reaction will proceed smoothly without gel formation to produce a condensate having reactive hydroxyl or carboxylic acid groups. "Condensate" and "condensation reaction" as used herein include the ring-opening of and reaction across the cyclic ester although a component such as water is not split out. The hydroxyl or carboxylic acid functional acrylate polymer provides to the polymer composition a rigid, hydrocarbon backbone which increases hardness values obtained when cross-linked with, for example, melamine or a polyurethane. The cyclic ester, such as epsilon-caprolactone, provides flexible side chains with terminal hydroxyl or carboxylic acid groups off of the main chain. This results in an oligomer with a unique combination of both hard inflexible units and softer flexible side chains. Polymers possessing flexible side chains with terminal carboxyl groups may exhibit crystallinity and solubility in aqueous alkaline solitions. Such polymers can be used, for example, in alkali-soluble coatings (such as alkali-soluble floor finishes), alkali-soluble resins for graphic arts formulations, alkali-soluble support resins for polymers prepared, for example, via emulsion-polymerization processes; and inclusion in certain hair-spray formulations, shampoos, and other types of cosmetic products. Further, the unique combination of producing the product in bulk, i.e., in the absence of solvent, and in the absence of catalyst, provides products superior to those obtained when utilizing a solvent and/or catalyst. Additonally, a greater variety of reactors can be employed since solvents, which increase the volume of the reactants, are not utilized.

The present invention, therefore, comprises providing a vinyl polymer component such as the polyacrylates carrying reactive hydroxyl or carboxylic acid functionality on the backbone of the polymer and a suitable compatible cyclic ester, such as epsilon-caprolactone; and reacting the polymer component and the cyclic ester component in bulk in the absence of a catalyst to provide a reaction product having characteristics not obtained through the reaction of the polymer component and cyclic ester in the presence of a solvent and/or catalyst. The process for preparing the polymer compositions of the invention can be carried out in a variety of reactors either in batch, semi-batch, or continuous operations.

It is critical that the polymer component of the invention contain hydroxyl or carboxylic acid functionality along the backbone of the polymer for reaction with the cyclic ester component. Addition polymers which can be used according to this invention are disclosed in commonly assigned U.S. Patent Nos. 4,414,370; 4,529,787, and 4,546,160, the disclosures thereof being incorporated herein by reference. More particularly,

-the '370 patent discloses styrene and acrylic acid copolymers made by bulk thermal initiation which have a low weight average molecular weight and having a relatively high number average molecular weight. The process produces resins having relatively high aromatic content, making the resins particularly suitable for use in high solids coatings.

-the '787 patent discloses aromatic/acrylate polymers manufactured in a bulk initiated process wherein the process utilizes a polymerization initiator in the presence of low solvent levels to produce polymers having a narrow molecular weight distribution and a low chromophore content. These polymers have a number average molecular weight of from about 500 to 6000, a polydispersity of less than about 2.5, and a dispersion index of less than about 4.5. The polymers, because of their low chromophore content, are particularly useful in protective coatings including floor polishes. - the '160 patent discloses a continuous bulk polymerization process for producing polymers having a number average molecular weight of about 1000 to about 2500, a polydispersity of less than about 3, a dispersion index of up to about 5, and a low chromophore content.

As will be apparent, it is essential that the monomer component useful in the processes of the aforesaid patents be selected so as to provide the hydroxyl or carboxylic acid functionality essential to the present invention.

Polymers which can be used according to this invention, in addition to those described in the aforesaid patents, include homo- and copolymers of monomers obtained through solution reaction having only one reactive site of ethylenic unsaturation per molecule, with there being at least one monomer present which will provide hydroxyl or carboxylic acid functionality.

The preferred hydroxyl-containing monomers for producing the polymers of the invention include 2-hydroxyethyl acrylate, 3-chloro-2-hydroxypropyl acrylate, 2-hydroxybutyl acrylate, 6-hydroxyhexyl acrylate, 2-hydroxymethyl methacrylate, 2-hydroxypropyl methacrylate, 6-hydroxyhexyl methacrylate, 5,6-dihydroxyhexyl methacrylate, and the like. The preferred carboxylic acid containing monomers include acrylic acid, methacrylic acid, maleic anhydride, and fumaric anhydride. It is to be understood that although monomers can be used according to this invention which are free of hydroxyl or carboxylic acid functionality, at least one monomer must be present to provide the necessary hydroxyl or carboxylic acid functionality on the backbone of the polymer for reaction with the cyclic ester. The hydroxyl or carboxylic acid functionality containing monomer can comprise from about 0.1 to 100%, and preferably from 10 to 50%, of the total monomer making up the polymer.

The non-hydroxyl, non-carboxylic acid, modifying monomers which can be used herein include the acrylate esters such as the (meth)acrylate esters such as methyl methacrylate, ethyl (meth)acrylate, n-propyl (meth)acrylate, n-butyl (meth)acrylate, isopropyl (meth)acrylate, isobutyl (meth)acrylate, n-amyl (meth)acrylate, n-hexyl (meth)acry late, isoamyl (meth)acrylate, 2-hydroxyethyl (meth)acrylate, 2-hydroxypropyl (meth)acrylate, N,N-dimethylaminoethyl (meth)acrylate, N,N-diethylaminoethyl (meth)acrylate, t-butylaminoethyl (meth)acrylate, 2-sulfoethyl (meth)acrylate, trifluoroethyl (meth)acrylate, benzyl (meth)-acrylate, 2-n-butoxyethyl (meth)acrylate, 2-chloroethyl (meth)acrylate, sec-butyl (meth)acrylate, tert-butyl (meth)acrylate, 2-ethylbutyl (meth)acrylate, cinnamyl (meth)acrylate, cyclohexyl (meth)acrylate, cyclopentyl (meth)acrylate, 2-ethoxyethyl (meth)acrylate, furfuryl (meth)acrylate, hexafluoroisopropyl (meth)acrylate, 3-methoxybutyl (meth)acrylate, 2-methoxybutyl (meth)acrylate, 2-nitro-2-methylpropyl (meth)acrylate, n-octyl-(meth)acrylate, 2-ethylhexyl (meth)acrylate, 2-phenoxyethyl (meth)acrylate, 2-phenylethyl (meth)acrylate, phenyl (meth)acrylate, propargyl (meth)acrylate, tetrahydrofurfuryl (meth)acrylate, and tetrahydropyranyl (meth)acrylate. As used herein, "meth" in parentheses before acrylic or acrylate is used to designate either the methacrylic or acrylic compound. Other non-hydroxyl and non-carboxyl group containing monomers which can be used include ethylenic monomers such as vinyl acetate, vinyl pyridine, vinyl pyrollidone, methyl crotonate, and the like.

Other addition polymers useful according to this invention include poly(vinylalcohol) and polymers which are carboxyl-containing addition polymers including those where the carboxyl groups are end capped with monoepoxides to provide hydroxyl functionality.

Cyclic Ester Component Of Invention

The cyclic ester used in this invention can be any cyclic ester or combination of cyclic esters, preferably having four or more carbon atoms in the ring which will undergo a ring-opening reaction. Specifically, the cyclic esters used in the process of this invention preferably will have the general formula -

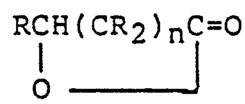

wherein n is at least one, at least n+1R are hydrogen, the remainder of the R's are hydrogen, alkyl, cycloalkyl, alkoxy or single ring aromatic hydrocarbon radicals. Unsubstituted epsilon-caprolactone, in which n is four and all the R's are hydrogen, is a highly preferred material. The substituted epsilon-caprolactones also preferred for use herein are the various monoalkyl epsilon-caprolactones such as the monomethyl-, monoethyl-, monopropyl-, monoisopropyl-, etc., to monododecyl epsilon-caprolactones; dialkyl epsilon-caprolactones in which the two alkyl groups are substituted on the same or different carbon atoms, but not both on the epsilon carbon atom; trialkyl epsilon-caprolactones in which two or three carbon atoms in the cyclic ester ring are substituted, so long as the epsilon carbon atom is not disubstituted; alkoxy epsilon-caprolactones such as methoxy and ethoxy epsilon-caprolactones; and cycloalkyl, aryl, and aralkyl epsilon-caprolactones such as cyclohexyl, phenyl and benzyl epsilon-caprolactones.

Other cyclic esters useful herein having at least one ring-openable inner ester bond include gamma-butyrolactone, gamma-valerolactone, ethylene carbonate, tetramethylene carbonate, 2,2-dimethyl-4-phenyl-1,3-dioxolan-5-one, alpha-n-propyl-delta-valerolactone, delta,delta-dimethyl-delta-valerolactone, 3-ethyl-1,4-dioxan-2-one, 3,3,6-trimethyl-1,4-dioxane-2-one, tetramethyl glycolide, tetraphenyl glycolide, 3-oxa-epsilon-caprolactone, beta-propiolactone, alpha,alpha-bis(chloromethyl)propiolactone, beta-butyrolactone, pivalolactone (PVL), thio-butyrolactone (TBL), delta-valerolactone (DVL), alpha,beta,gamma-trimethoxy-delta-valerolactone, 1,4-dithiane-2,5-dione, trimethylene carbonate, neopentyl carbonate, ethylene oxalate,

betamethyl-epsilon-isopropyl-epsilon-caprolactone, propylene oxalate, lactones of 4-hydroxycyclohexanecarboxylic acid, cis-disalicylide, di-o-cresotide, and trisalicylide, as well as combinations of the above. Preferred cyclic ester molecules having at least one ring-openable inner ester bond include gamma-butyrolactone, delta-valerolactone, pivalolactone, thio-butyrolactone, beta-butyrolactone, epsilon-caprolactone, and mixtures thereof.

Reaction Of Polymer And Lactone Components

The reaction of the polymer component and cyclic ester component is carried out in bulk at temperatures of from about 100°C to 300°C, and preferably at a temperature of from about 215°C to 250°C. The temperature selected will be governed by the characteristics of the polymer component and the cyclic ester selected. Since the reaction is carried out in bulk without solvent, it is essential that the polymer component and the cyclic ester component are selected so that they are completely miscible in melt form, or rapidly become miscible on reaction. If the polymer component and cyclic ester component are immiscible, a homogeneous reaction product will not be obtained.

The reaction between the hydroxyl or carboxylic acid group of the polymer component and the cyclic ester is through ring-opening of the cyclic ester between the -C = O and -O-, with the cyclic ester adding to the polymer component without formation of water or other by-product. The reaction of, for example, epsilon-caprolactone and the hydroxyl or carboxylic acid polymer component wherein P is the polymer moiety is as follows:

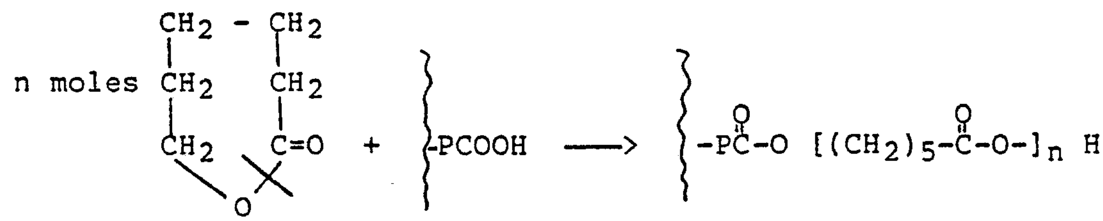

or

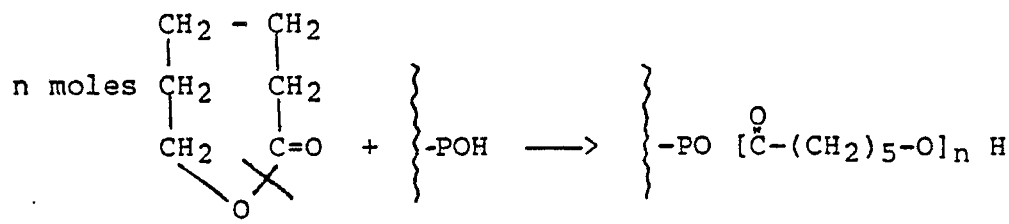

It is to be understood that there may be some homo-polymerization of the cyclic ester component under the conditions of the reaction. Accordingly, the cyclic ester can be present in an amount of from about 0.1 to 10 moles of the cyclic ester per mole of hydroxyl or carboxylic acid group on the polymer component, with the optimum amounts being from about 0.5 to 4 moles of the cyclic ester per mole of hydroxyl or carboxylic acid group on the polymer component. The temperature of the reaction can be varied within the above ranges to effect and control the rate and extent of reaction of the cyclic ester with the polymer component. Variations in the amount of cyclic ester will effect the flexibility and hardness of the finally cured film. Since the reaction is carried out in bulk, the equipment used in the polymerization process can vary substantially. Thus, the reactors utilized can be designed for batch, semi-batch or continuous operations, and include glass-lined reactors, screw-type reactors, pressure reactors, depending on the reaction temperature, and the like. Since there is no solvent present, the reactors can be much smaller and more compact relative to the reactors utilized when a solvent is present.

Use Of The Condensation Products Of The Polymer Component And Cyclic Ester

The compositions formed by the process of the present invention are polymeric compositions having a molecular weight and crosslinking capability which can be controlled based on the selection of polymer and

cyclic ester components and reaction time. The composition will have on the molecule reactive hydroxyl or carboxylic acid groups which will cause the compositions to crosslink with commercially available crosslinking agents such as melamine, the polyisocyanates, amino condensation products, and the like. Since the product is formed in bulk, it is not necessary to strip solvent from the reaction product prior to use. Additionally, since no catalyst is utilized, the composition will be free of ionic species contributed by the catalyst. Accordingly, the compositions can be used in special applications where the presence of ionic species can adversely affect the film formation and/or the resistance characteristics of the final product such as in decorative finishes, automotive coatings, and the like. The products of the invention have excellent application in the fabrication of liquid and powder protective coating compositions, paint binders, graphic arts inks, adhesives, floor polish ingredients, plastics additives, pigment-dispersant resins, curing materials in reinforced or composite plastics materials, components for reaction injection molding systems, and the like. The products can be tailored to a particular need as a result of the high degree of hydroxyl or carboxylic acid functionality contained on the compositions.

Products which contain carboxylic acid groups can be chemically converted, for example, into an aqueous resin cut, by neutralization of the acid functionality with a base such as ammonia. The products can be formulated into enamel appliance coatings, overprint varnishes, adhesives, motor vehicle exterior surface coatings, and the like. Since the crosslinkable polymers disclosed herein can be controllably formulated so as to be either "hard" or "soft," as desired, such polymers can be formulated into floor finishes, ink dispersants, water-based clear overprint varnishes, impregnants, binders, plasticizers, levelling agents, melt flow improvers, and the like.

## DETAILED DESCRIPTION OF PRESENTLY PREFERRED EMBODIMENTS

Having described the invention in general terms, the following detailed examples are set forth to further illustrate the invention. Parts and percentages are by weight unless otherwise indicated.

## EXAMPLE 1

In this example the polymer component is an addition copolymer containing reactive carboxyl groups comprising 31% styrene, 32% acrylic acid, and 37% alpha-methylstyrene. The copolymer has an acid value of 255. The cyclic ester component is epsilon-caprolactone.

### Procedure

95 grams of the polymer component and 5 grams of epsilon-caprolactone are charged to a three-necked round-bottom flask. The center neck is fitted with an agitator, one side neck is fitted with a nitrogen gas inlet and a thermometer, and one side neck is fitted with a reflux con denser. The mixture is heated with agitation to a temperature of 220 °C until the polymer component is fully fluid. The reaction then proceeds for ten minutes. The resultant polymer composition is removed from the flask at 100% solids and is analyzed by gas chromatography (GC), gel permeation chromotography (GPC), and differential scanning calorimetry (DSC).

## EXAMPLES 2-13

In these examples, Example 1 was repeated using the same copolymer and cyclic ester. However, the amounts of polymer component and cyclic ester were adjusted as follows:

| | Polymer Component | Cyclic Ester |
|---|---|---|
| Example 2 | 90 g | 10 g |
| Example 3 | 85 g | 15 g |
| Example 4 | 80 g | 20 g |
| Example 5 | 75 g | 25 g |
| Example 6 | 70 g | 30 g |
| Example 7 | 65 g | 35 g |
| Example 8 | 60 g | 40 g |
| Example 9 | 55 g | 45 g |
| Example 10 | 50 g | 50 g |
| Example 11 | 45 g | 55 g |
| Example 12 | 40 g | 60 g |
| Example 13 | 35 g | 65 g |

## EXAMPLES 14-16

In these examples, the polymer component is an addition copolymer containing reactive carboxyl groups com prising 33% styrene, 30% acrylic acid, and 37% alpha-methylstyrene. The copolymer has an acid value of 200. The cyclic ester component is epsilon-caprolactone. The polymer component and cyclic ester component were reacted in accordance with the procedure of Example 1 in the ratios as follows:

| | Polymer Component | Cyclic Ester |
|---|---|---|
| Example 14 | 70 g | 30 g |
| Example 15 | 65 g | 35 g |
| Example 16 | 60 g | 40 g |

The physical characteristics of the polymers made in accordance with Examples 1-16 are set forth in Table 1. These characteristics establish the effect of varying the ratio of polymer to cyclic esters and, additionally, the effect of varying the composition of the copolymer used in the reaction with the cyclic ester.

TABLE 1

| Example | Wt.% CAP | Moles CAP/Mole Polymer | Mw | Mn | Mw/Mn | Acid Value | Tg | Tm |
|---|---|---|---|---|---|---|---|---|
| * | 0 | 0.00 | 1750 | 770 | 2.27 | 255 | 57 | - |
| 1 | 5 | 0.10 | 1840 | 800 | 2.29 | 240 | 50 | - |
| 2 | 10 | 0.22 | 1980 | 850 | 2.33 | 229 | 37 | - |
| 3 | 15 | 0.35 | 2120 | 880 | 2.41 | 216 | 30 | - |
| 4 | 20 | 0.49 | 2250 | 900 | 2.49 | 205 | 17 | - |
| 5 | 25 | 0.66 | 2460 | 930 | 2.65 | 193 | 12 | - |
| 6 | 30 | 0.85 | 2790 | 980 | 2.83 | 183 | 0 | - |
| 7 | 35 | 1.06 | 3070 | 980 | 3.11 | 171 | -12 | 38 |
| 8 | 40 | 1.32 | 3380 | 1030 | 3.27 | 159 | -19 | 40 |
| 9 | 45 | 1.61 | 3940 | 1110 | 3.55 | 144 | -20 | 39 |
| 10 | 50 | 1.97 | 4220 | 1140 | 3.70 | 134 | -30 | 38 |
| 11 | 55 | 2.41 | 5100 | 1470 | 3.47 | 120 | -37 | 36 |
| 12 | 60 | 2.96 | 5940 | 1570 | 3.77 | 112 | -39 | 38 |
| 13 | 65 | 3.66 | 7150 | 1890 | 3.78 | 92 | -52 | 38 |
| ** | 0 | 0.00 | 8310 | 2800 | 2.96 | 200 | 100 | - |
| 14 | 30 | 0.90 | 10290 | 3080 | 3.34 | 157 | 5 | - |
| 15 | 35 | 1.13 | 10520 | 3100 | 3.39 | 147 | -4 | 43 |
| 16 | 40 | 1.40 | 10960 | 3160 | 3.46 | 137 | -8 | 45 |

* Starting Polymer (Unmodified) Examples 1-13

** Starting Polymer (Unmodified) Examples 14-16

Tm = The temperature where the onset of the overall change in heat capacity from the solid to the liquid phase occurs.

## EXAMPLE 17

In this example the polymer component is an addition copolymer containing reactive carboxyl groups comprising 32% acrylic acid, 37% alpha-methylstyrene, and 31% styrene. The copolymer has an acid value of 255. The cyclic ester component is delta-valerolactone (DVL).

### Procedure

60 grams of the polymer component and 40 grams of DVL are charged to a four-necked round-bottom flask. The center neck is fitted with an agitator, one side neck is fitted with a nitrogen gas inlet and a thermometer, and one side neck is fitted with a reflux condenser. The final neck is fitted with a removable ground glass stopper to permit removal of aliquots for analysis. The mixture is heated with agitation to a temperature of 220°C until the polymer component is fully fluid. The reaction then proceeds for 15 minutes. The resultant polymer composition is removed from the flask and is analyzed by gas chromatography (GC) and gel permeation chromotography (GPC). 95% of the DVL is converted after 15 minutes reaction time. The polymer has a number-average molecular weight (Mn) of 1320, a weight-average molecular weight (Mw) of 3310, a sedimentation-value molecular weight (Mz) of 6640, a polydispersity (Mw/Mn) of 2.5, and a related value (Mz/Mn) of 5.0.

## EXAMPLE 18

In this example the polymer used is the polymer used in Example 17. The cyclic ester component is

betabutyrolactone (BBL). 60 grams of the polymer component and 34.4 grams of BBL are charged to the reactor described in Example 17. The mixture is heated with agitation to a temperature of 220° C until the polymer component is fully fluid. The reaction then proceeds for 15 minutes. The resultant polymer composition is removed from the flask and is analyzed by gas chromatography (GC) and gel permeation chromotography (GPC). 99.9% of the BBL is converted after 15 minutes reaction time. The polymer has a number-average molecular weight (Mn) of 1010, a weight-average molecular weight (Mw) of 2090, a sedimentation-value molecular weight (Mz) of 4940, a polydispersity (Mw/Mn) of 2.1, and a related value (Mz/Mn) of 4.9.

## EXAMPLE 19

In this example the polymer used is the polymer used in Example 17. The cyclic ester component is pivalolactone (PVL). 60 grams of the polymer component and 40 grams of PVL are charged to the reactor described in Example 17. The mixture is heated with agitation to a temperature of 220° C until the polymer component is fully fluid. The reaction then proceeds for 15 minutes. The resultant polymer composition is removed from the flask and is analyzed by gas chromatography (GC) and gel permeation chromotography (GPC). 99.8% of the PVL is converted after 15 minutes reaction time. The polymer has a number-average molecular weight (Mn) of 1150, a weight-average molecular weight (Mw) of 2510, a sedimentation-value molecular weight (Mz) of 5650, a polydispersity (Mw/Mn) of 2.2, and a related value (Mz/Mn) of 4.9.

## EXAMPLE 20

In this example the polymer component is an addition copolymer containing reactive hydroxyl groups comprising 33% hydroxyethyl methacrylate, 34% 2-ethylhexyl acrylate and 33% styrene. The copolymer has a hydroxyl value of 142. The cyclic ester component is delta-valerolactone (DVL).

### Procedure

72.3 grams of the polymer component and 18.4 grams of DVL are charged to a four-necked round-bottom flask. The center neck is fitted with an agitator, one side neck is fitted with a nitrogen gas inlet and a thermometer, and one side neck is fitted with a reflux condenser. The final neck is fitted with a removable ground glass stopper to permit removal of aliquots for analysis. The mixture is heated with agitation to a temperature of 220° C until the polymer component is fully fluid. The reaction then proceeds for six hours. The resultant polymer composition is removed from the flask and is analyzed by gas chromatography (GC) and gel permeation chromotography (GPC). 40.9% of the DVL is converted after the six hour reaction time. The polymer has a number-average molecular weight (Mn) of 1280, a weight-average molecular weight (Mw) of 3760, a sedimentation-value molecular weight (Mz) of 11,150, a polydispersity (Mw/Mn) of 2.9, and a related value (Mz/Mn) of 8.7.

## EXAMPLE 21

In this example the polymer used is the polymer used in Example 20. The cyclic ester component is betabutyrolactone (BBL). 72.3 grams of the polymer component and 15.8 grams of BBL are charged to the reactor described in Example 20. The mixture is heated with agitation to a temperature of 220° C until the polymer component is fully fluid. The reaction then proceeds for 30 minutes. The resultant polymer composition is removed from the flask and is analyzed by gas chromatography (GC) and gel permeation chromotography (GPC). 99.9% of the BBL is converted after the 30 minute reaction time. The polymer has a number- average molecular weight (Mn) of 1320, a weight-average molecular weight (Mw) of 2650, a sedimentation-value molecular weight (Mz) of 5190, a polydispersity (Mw/Mn) of 2.0, and a related value (Mz/Mn) of 3.9.

EXAMPLE 22

In this example the polymer used is the polymer used in Example 20. The cyclic ester component is pivalolactone (PVL). 72.3 grams of the polymer component and 18.4 grams of PVL are charged to the reactor described in Example 20. The mixture is heated with agitation to a temperature of 220 °C until the polymer component is fully fluid. The reaction then proceeds for 30 minutes. The resultant polymer composition is removed from the flask and is analyzed by gas chromatography (GC) and gel permeation chromotography (GPC). 94.6% of the PVL is converted after 30 minutes reaction time. The polymer has a number-average molecular weight (Mn) of 1550, a weight-average molecular weight (Mw) of 4440, a sedimentation-value molecular weight (Mz) of 11,550, a polydispersity (Mw/Mn) of 2.9, and a related value (Mz/Mn) of 7.5.

EXAMPLE 23

In this example the polymer component is an addition copolymer containing reactive hydroxyl groups comprising 33% hydroxyethyl methacrylate, 34% 2-ethylhexyl acrylate and 33% styrene. The copolymer has a hydroxyl value of 142. The cyclic ester component is epsilon-caprolactone.

Procedure

420.0 grams of the polymer component is charged to a four-necked round-bottom flask. The center neck is fitted with an agitator, one side neck is fitted with a nitrogen gas inlet, and one neck is fitted with a thermometer. The final neck is fitted with a removable ground glass stopper to permit addition of materials. The composition is heated with agitation to 215 °C until the polymer component is fully fluid. Thereafter, the ground glass stopper is removed from the side neck and 175 grams epsilon-caprolactone is slowly added with the temperature being maintained at approximately 215 °C. The reaction temperature is stabilized at 215 °C, and the reaction allowed to proceed for four hours. Using gas chromatography (GC), the percent conversion of the cyclic ester is measured. In this example it is converted 98.4% after the four-hour hold time. The molecular weight distribution is measured by gel permeation chromotography (GPC). The polymer has a number-average molecular weight (Mn) of 1770, a weight-average molecular weight (Mw) of 3820, a sedimentation-value molecular weight (Mz) of 7510, a polydispersity (Mw/Mn) of 2.15, and a related value (Mz/Mn) of 4.24.

EXAMPLE 24

In this example the polymer used is that used in Example 23. The reactor is a two-liter pressure reactor. 863.9 grams of polymer component is placed in the reactor and it is adequately purged with nitrogen and brought to 250 °C. 264.1 grams epsilon-caprolactone is added. The temperature is maintained for one hour upon which the polymer is removed from the reactor. The percent conversion of epsilon-caprolactone is 96.5%. The Mn = 1500, Mw = 3260, Mz = 6410, Mn/Mw = 2.17, Mz/Mn = 4.26.

EXAMPLE 25

In this example the polymer used is that used in Example 23. The reactor used is that used in Example 24. 786.9 grams polymer component is placed in the reactor and it is adequately purged with nitrogen and brought to 250 °C. 477.7 grams epsilon-caprolactone is added. The temperature is maintained for one hour. The percent conversion of epsilon-caprolactone is 75.65%. The Mn = 1480, Mw = 3190, Mz = 6300, Mw/Mn = 2.17, Mz/Mn = 4.30.

EXAMPLE 26

In this example the polymer component has the following composition: 19.0 styrene, 3.0 alpha-methyl styrene, 19.0 hydroxyethyl methacrylate, 39.0 methyl methacrylate, and 20.0 butyl acrylate. The reactor used is that in Example 23. 413 grams polymer component is added to the reactor and it is adequately purged with nitrogen and brought to 215° C. 75.7 grams epsilon-caprolactone is added. The temperature is maintained for four hours. The percent conversation of epsilon-caprolactone is 94.0%. The Mn = 5040, Mw = 22620, Mz = 46170, Mw/Mn = 4.49, Mz/Mn = 9.16.

EXAMPLE 27

In this example the polymer component is 75% hydrolyzed poly(vinylalcohol). The cyclic ester component is epsilon-caprolactone (CAP). 35 grams of the polymer component and 67.9 grams of CAP are charged to a four-necked round bottom flask. The center neck is fitted with an agitator, one side neck is fitted with a nitrogen gas inlet and a thermometer, and one side neck is fitted with a reflux condenser. The final neck is fitted with a removable ground glass stopper to permit removal of aliquots for analysis. The mixture is heated with agitation to a temperature of 220° C until the polymer component is fully fluid. The reaction then proceeds for 15 minutes. The resultant polymer composition is removed from the flask and is analyzed by gas chromatography (GC) and gel permeation chromotography (GPC). 98.9% of the CAP is converted after 15 minutes reaction time. The polymer has a number-average molecular weight (Mn) of 6320, a weight-average molecular weight (Mw) of 51,000, a sedimentation-value molecular weight (Mz) of 140,000, a polydispersity (Mw/Mn) of 8.0, and a related value (Mz/Mn) of 22.1.

EXAMPLE 28

25.0 grams of polymer component made in Example 26 was dissolved in 17.8 grams methylamyl ketone and formulated into a thermosetting film. 4.38 grams melamine was added to the polymer-containing solution, together with about .146 grams para-toluene sulfonic acid. The melamine functions as the polymer-curing ingredient, and the acid functions as a catalyst. After mixing for about 60 minutes, the polymer was applied to a cold-rolled steel substrate, and then baked at a temperature of 150° C for 15 minutes. During this baking step substantially all of the solvent present in the curing polymer was driven off, thereby forming a coating having a thickness of about 1.5 mils. Such a coating exhibited a reverse-impact resistance of 100 inches per pound, a Konig hardness of 120, and a pencil hardness of H.

EXAMPLE 29

25.0 grams of polymer component described in Example 23 was formulated into a thermoset film as described in Example 28. The final film exhibited a reverse-impact resistance of 84 inches per pound, a Konig hardness of 72, and a pencil hardness of F.

EXAMPLE 30

25.0 grams of polymer component described in Example 25 was formulated into a thermoset film as described in Example 28. The final film exhibited a reverse-impact resistance of 88 inches per pound, a Konig hardness of 88, and a pencil hardness of H.

In the examples the addition polymers utilized can be replaced by other addition polymers as long as the addition polymer has the requisite critical characteristics of hydroxyl or carboxylic acid functionality. Further, the cyclic ester component of the examples can be replaced with other cyclic esters having characteristics defined hereinabove. By the judicious selection of the polymer and cyclic ester components

products can be tailored to have characteristics for a particular application.

Additionally, in the examples the lactone can be replaced with other ring-opening compositions such as epsilon-caprolactam. The substitution of the lactam provides additional functionality through the ring nitrogen. The polymer component can also be selected to include in the polymer component varying amounts of the hydroxyl or carboxylic acid functionality which will, depending on reaction conditions, remain intact in the products of the invention to enhance crosslinking activity. Such variations in the polymer composition can be utilized in tailoring the composition, including the introdùction of amido, ether, and the like, functionality so as to provide greater resistance to hydrolysis, saponification, and the like.

As will be apparent to one skilled in the art, various modifications can be made within the scope of the aforesaid description. Such modifications being within the ability of one skilled in the art form a part of the present invention and are embraced by the appended claims.

## Claims

1. Bulk process characterized by reacting at a temperature of from 100 - 300°C for a period of from about ten minutes to six hours a polymer component obtained by polymerizing at least one ethylenically unsaturated monomer, said polymer component having hydroxyl or carboxylic acid functionality on the polymer backbone, with a cyclic ester component having the formula

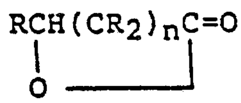

wherein n is at least one, at least n+1R are hydrogen, and the remainder of the R's are hydrogen, alkyl, cycloalkyl, alkoxy or single ring aromatic hydrocarbon radicals; said lactone component being present in an amount of from 0.1 to 10 moles per mole of hydroxyl or carboxylic acid group on said polymer component and being selected to be substantially miscible with the polymer component at the condition of the reaction, said process being carried out without use of catalyst or solvent.

2. The process according to claim 1 characterized in that polymer component is a polyacrylate containing hydroxyl alkyl moieties.

3. The process according to claim 1 or 2 characterized in that polymer component is a polyacrylate containing carboxylic acid moieties.

4. The process according to claim 1 or 2 characterized in that polymer component is poly(vinylalcohol) containing reactive hydroxyl groups.

5. The process according to claim 1, 2, 3 or 4 characterized in that cyclic ester is epsilon-caprolactone, delta-valerolactone, beta-butyrolactone or pivalolactone.

6. The process according to any of claims 1-5 characterized in that temperature of reaction is from about 210°C - 250°C.

7. The process according to any of claims 1-6 characterized in that cyclic ester is present at from 0.5 to 4 moles per mole of hydroxyl group on the polymer component.

8. The process according to any of claims 1-6 characterized in that cyclic ester is present at from 0.5 to 4 moles per mole of carboxyl group on the polymer component.

9. A composition of matter characterized by being produced by the process of claims 1-8.

10. A crosslinkable composition of matter characterized by comprising the product of claim 9 and a crosslinking agent, preferably melamine or isocyanate.